(19) **Europäisches Patentamt / European Patent Office / Office européen des brevets**

(11) **EP 2 596 479 B1**

(12) **FASCICULE DE BREVET EUROPEEN**

(45) Date de publication et mention
de la délivrance du brevet:
**23.11.2016 Bulletin 2016/47**

(21) Numéro de dépôt: **11752589.9**

(22) Date de dépôt: **19.07.2011**

(51) Int Cl.:
*G06K 9/00* (2006.01)  *G06F 17/30* (2006.01)
*G06K 5/00* (2006.01)  *G06K 7/10* (2006.01)
*G06K 7/14* (2006.01)  *G06K 9/62* (2006.01)
*G07D 7/20* (2016.01)  *G07D 7/00* (2016.01)

(86) Numéro de dépôt international:
**PCT/FR2011/051727**

(87) Numéro de publication internationale:
**WO 2012/017161 (09.02.2012 Gazette 2012/06)**

(54) **PROCÉDÉS ET DISPOSITIFS DE MARQUAGE ET D'AUTHENTIFICATION D'UN PRODUIT PAR UN CONSOMMATEUR**

VERFAHREN UND VORRICHTUNGEN ZUR KENNZEICHNUNG UND AUTHENTIFIZIERUNG EINES PRODUKTS DURCH EINEN VERBRAUCHER

METHODS AND DEVICES FOR MARKING AND AUTHENTICATING A PRODUCT BY A CONSUMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2010 FR 1055826**

(43) Date de publication de la demande:
**29.05.2013 Bulletin 2013/22**

(73) Titulaire: **Advanced Track And Trace**
**92500 Rueil-Malmaison (FR)**

(72) Inventeurs:
• **MASSICOT, Jean Pierre**
 **F-92500 Rueil-Malmaison (FR)**

• **FOUCOU, Alain**
 **F-92500 Rueil-Malmaison (FR)**
• **SAGAN, Zbigniew**
 **F-92500 Rueil-Malmaison (FR)**

(74) Mandataire: **Cornuejols, Georges et al**
**Cassiopi**
**230 Avenue de l'Aube Rouge**
**34170 Castelnau-le-Lez (FR)**

(56) Documents cités:
**EP-A2- 1 672 593      WO-A2-2008/009826**
**DE-A1- 10 224 256**

**Description**

La présente invention concerne un procédé et un dispositif de marquage de produits et un procédé et un dispositif d'authentification d'un produit par un consommateur. Elle s'applique à tout type de produit, avec ou sans emballage.

Les dispositifs d'authentification de produit connus dans l'art antérieur sont réservés à des professionnels munis de matériels spécifiques onéreux. Il n'est donc pas possible, pour un consommateur, de vérifier l'authenticité d'un produit avant de l'acheter, par exemple dans un magasin, ou de le consommer, par exemple au restaurant. La contrefaçon de produits onéreux, notamment alcools, médicaments et parfums, s'étend ainsi facilement.

On connaît des documents (EP 1 672 593, DE 10 224 256 et WO 2008 009826) qui décrivent des systèmes de marquages de documents. Cependant, ces systèmes ne permettent pas de lutter efficacement contre la duplication et la contrefaçon de documents.

La présente invention vise à remédier à tout ou partie de ces inconvénients.

A cet effet, selon un premier aspect, la présente invention vise un procédé de marquage de produit, qui comporte :

- une étape de formation, sur ou dans ledit produit, d'une marque robuste à la copie, avec une première résolution,
- une étape de formation, sur ou dans ledit produit, d'une marque fragile à la copie, avec une deuxième résolution supérieure à la première résolution,
- une étape de capture d'une image de ladite marque robuste, de ladite marque fragile et d'une autre partie du produit et
- une étape de mémorisation d'une information représentative de l'image de ladite marque robuste, de ladite marque fragile et de ladite autre partie d'image.

Grâce à ces dispositions, en cas de copie illégale du produit, il peut être identifié grâce à la marque robuste et authentifié grâce, d'une part, à la marque fragile et, d'autre part, à l'image de la partie du produit. Ainsi, la destruction ou l'altération de la marque fragile n'empêchent pas l'authentification du produit. De plus, en comparant l'information représentative de l'image mémorisée avec une information représentative d'une image prise avec un capteur d'image grand public, on peut authentifier le produit même si la qualité d'image ne permet pas le traitement de la marque fragile.

La présente invention permet ainsi l'authentification de produits par un consommateur muni d'un terminal mobile communiquant, par exemple un assistant personnel numérique ou un téléphone mobile, doté d'un capteur d'image, ou appareil photo.

Selon des caractéristiques particulières, au cours d'au moins une étape de formation, la position de la marque formée au cours de cette étape de formation, par rapport à l'autre partie d'image, est aléatoire.

Grâce à ces dispositions, des caractéristiques géométriques entre les positions de la marque robuste, de la marque fragile et de l'autre partie du produit permettent aussi d'authentifier le produit.

Selon des caractéristiques particulières, ladite marque robuste est un code à barres en deux dimensions.

Par exemple, ce code à barres en deux dimensions est un DataMatrix (marque déposée). On peut ainsi stocker une importante quantité d'information sur le produit (par exemple, le nom de son fabriquant et le lieu et la date de fabrication).

Selon des caractéristiques particulières, ladite marque fragile à la copie est un code numérique authentifiant, le procédé objet de la présente invention comporte une étape de détermination d'une information représentative des erreurs d'impression de ladite marque fragile à la copie et au cours de l'étape de mémorisation, on mémorise ladite information représentative des erreurs d'impression.

Selon des caractéristiques particulières, au cours de chacune des étapes de formation de marques, la position de ladite marque par rapport à un élément du produit est variable et, lors de l'étape de capture d'une image, on capte une image dudit élément.

Selon des caractéristiques particulières, au cours des étapes de formation de marques, on décale, entre deux produits différents, différemment les marques formées.

Selon un deuxième aspect, la présente invention vise un dispositif de marquage de produit, qui comporte :

- un moyen de formation, sur ou dans ledit produit, d'une marque robuste à la copie, avec une première résolution,
- un moyen de formation, sur ou dans ledit produit, d'une marque fragile à la copie, avec une deuxième résolution supérieure à la première résolution,
- un capteur d'image adapté à capté une image de ladite marque robuste, de ladite marque fragile et d'une autre partie du produit et
- un moyen de mémorisation d'une information représentative de l'image de ladite marque robuste, de ladite marque fragile et de ladite autre partie d'image.

Selon un troisième aspect, la présente invention vise un procédé d'authentification de produit, qui comporte :

- une étape de capture, sur ledit produit d'une image d'une marque robuste et d'une marque fragile à la copie de résolution plus élevée que la marque robuste et d'une autre partie du produit,
- une étape de transmission d'une information représentative de l'image de ladite marque robuste, de ladite marque fragile et de ladite autre partie d'image,
- une étape de comparaison de ladite information représentative de l'image de ladite marque robuste, de ladite marque fragile et de ladite autre partie d'image avec au moins une information mémorisée à distance et
- en fonction du résultat de ladite étape de comparaison, une étape d'affichage de données relatives au produit dont une image a été captée.

Dans des modes de réalisation, au cours de l'étape de comparaison, on effectue, d'abord, une étape de détermination de qualité de l'image de la marque fragile à la copie et :

- si la qualité est supérieure à une valeur prédéterminée, une comparaison d'une information représentative de la marque fragile à la copie et,
- sinon, une comparaison d'une information représentative de l'autre partie du produit.

Ainsi, même si l'image de la marque fragile à la copie n'est pas de qualité suffisante, par exemple du fait des conditions ou matériels de prise d'image, on peut néanmoins estimer l'authenticité du produit.

Selon un quatrième aspect, la présente invention vise un dispositif d'authentification de produit, qui comporte :

- un moyen de capture, sur ledit produit d'une image d'une marque robuste et d'une marque fragile à la copie de résolution plus élevée que la marque robuste et d'une autre partie du produit,
- un moyen de transmission d'une information représentative de l'image de ladite marque robuste, de ladite marque fragile et de ladite autre partie d'image,
- un moyen de comparaison de ladite information représentative de l'image de ladite marque robuste, de ladite marque fragile et de ladite autre partie d'image avec au moins une information mémorisée à distance et
- un moyen d'affichage de données relatives au produit dont une image a été captée, en fonction du résultat fourni par le moyen de comparaison.

Les avantages, buts et caractéristiques de ce dispositif de marquage, de ce procédé d'authentification et de ce dispositif d'authentification étant similaires à ceux du procédé de marquage objet de la présente invention, ils ne sont pas rappelés ici.

D'autres avantages, buts et caractéristiques de la présente invention ressortiront de la description qui va suivre faite, dans un but explicatif et nullement limitatif, en regard des dessins annexés, dans lesquels :

- la figure 1 représente, schématiquement, en vue de face, un premier mode de réalisation particulier des dispositifs objets de la présente invention,
- la figure 2 représente, sous forme d'un logigramme, des étapes mises en oeuvre dans un mode de réalisation particulier du procédé objet de la présente invention
- la figure 3 représente, en vue agrandie, un motif numérique identifiant mis en oeuvre dans des modes de réalisation particuliers du procédé objet de la présente invention,
- la figure 4 représente, en vue agrandie, le motif numérique identifiant de la figure 3, une fois imprimé sur une carte, lors d'une première impression d'une série,
- la figure 5 représente, en vue agrandie, le motif numérique identifiant de la figure 3, une fois imprimé sur une carte, lors d'une deuxième impression d'une série,
- la figure 6 représente une transformée cosinus discrète d'une image captée de l'un des motifs identifiants imprimés représentés dans les figures 4 et 5,
- les figures 7A et 7B représentent, sous forme de logigrammes, des étapes mises en oeuvre dans des modes de réalisation particuliers du procédé objet de la présente invention,
- la figure 8 représente une distribution des scores pour deux groupes de motifs identifiants mis en oeuvre dans des modes de réalisation particuliers du procédé objet de la présente invention,
- la figure 9 illustre en courbe obtenue lors de la détermination d'un taux optimale d'erreurs à obtenir à l'impression et
- la figure 10 représente une partie d'un produit mis en oeuvre dans les modes de réalisation particuliers des procédés et dispositifs objet de la présente invention illustrés en figures 1 et 2.

Avant de donner le détail de différents modes de réalisation particuliers de la présente invention, on donne, ci-après, des définitions qui seront utilisées dans la description :

- « matrice d'informations » : il s'agit d'une représentation physique d'un message, généralement apposée sur une surface unie (à la différence des watermarks ou filigranes numériques qui modifient les valeurs de pixels d'un décor à imprimer), lisible par une machine (en anglais « machine-readable representation of information »). La définition de la matrice d'informations englobe, par exemple, les codes à barres 2D, les codes à barres à une dimension et d'autre moyens de représentation de l'information qui sont moins intrusifs, tel que les « Dataglyphs » (marquage de données) ;

- « marquage » ou « impression » : tout processus par laquelle on passe d'une image digitale (incluant préférentiellement une matrice d'information) à sa représentation dans le monde réel, cette représentation étant généralement faite sur une surface : ceci inclut, de manière non-exclusive, l'impression à jet d'encre, laser, offset, thermique, ainsi que l'embossage, la gravure laser, la génération d'hologrammes. Des processus plus complexes, tel que le moulage, dans lequel l'image digitale est d'abord gravée dans le moule, puis moulée sur chaque produit, sont également inclus. Notons qu'une image « moulée » peut être vue comme ayant trois dimensions dans le monde physique même si sa représentation digitale en comporte deux. Notons encore que plusieurs des procédés mentionnés incluent plusieurs transformations, par exemple l'impression offset classique (contrairement au offset « computer-to-plate »), inclut la création d'un film, ledit film sevrant à créer une plaque, ladite plaque étant utilisée dans l'impression. D'autres procédés permettent également d'imprimer une information dans le domaine non-visible, soit en utilisant des fréquences à l'extérieur du spectre visible, ou encore à inscrivant l'information à l'intérieur de la surface, etc,

- « Empreinte » ou « information représentative d'une image » : ensemble de valeurs de caractéristique mesurées, permettant de représenter une marque et de la comparer à d'autres représentations de marques,

- « Capture » : tout processus par lequel on obtient une représentation digitale du monde réel, incluant la représentation digitale de la surface externe d'un produit ou de son épaisseur (par rétro-éclairage),

- « Cellule » : il s'agit d'une zone régulière d'un motif de points à caractéristiques variables (« MPCV »), généralement rectangulaire, voire carrée, dans laquelle se trouve, au maximum, un nombre prédéterminé de points, le nombre prédéterminé valant généralement un ;

- « Pixel de génération » : la plus petite zone considérée pour la génération d'un MPCV,

- « Point » : une zone imprimée élémentaire de très petite dimension, éventuellement variable, faisant contraste avec un arrière-plan, le point étant généralement la représentation d'un ou plusieurs pixels de génération,

- « Pixel de capture » ou « pixel d'image » : une zone dont l'image correspondant à un point photosensible élémentaire, ou pixel, d'un capteur d'image,

Les codes numériques authentifiants, aussi appelés par la suite « CNA » ou marques fragiles à la copie, sont des images numériques qui, une fois marquées sur un support, par exemple par impression ou modification locale du support, sont conçues de façon à ce que certaines de leurs propriétés, en général mesurables automatiquement à partir d'une image captée, soient modifiées si une image marquée est copiée. Les codes numériques authentifiants se basent généralement sur la dégradation d'un ou plusieurs signaux sensibles à la copie lors de l'étape de copie, un signal étant porté par des éléments d'image aux caractéristiques mesurables sensibles à la copie. Certains types de codes numériques authentifiants peuvent également contenir de l'information permettant d'identifier ou tracer le produit qui le contient.

Il existe plusieurs types de codes numériques authentifiants. Les motifs de détection de copie, aussi appelés par la suite « MDC », sont des images denses, en général de nature pseudo-aléatoire. Leur principe de lecture est basé sur une comparaison d'image pour mesurer un indice de similitude (ou de dissimilitude) entre le motif de détection de copie d'origine et le motif de détection de copie capturé, par exemple par un capteur d'image : si ce motif capturé est une copie, l'indice de similitude sera moins élevé que si c'est un original.

Les matrices d'information sécurisées, aussi appelés par la suite « MIS », sont, tout comme les codes à barre à deux dimensions, des images conçues pour transporter une grande quantité d'information de manière robuste. Cependant, contrairement aux codes à barre en deux dimensions, les matrices d'information sécurisées sont sensibles à la copie. A la lecture, on mesure un taux d'erreur du message codé extrait de la matrice, taux qui est plus élevé pour les copies que pour les originaux, ce qui permet de distinguer ces copies des impressions originales.

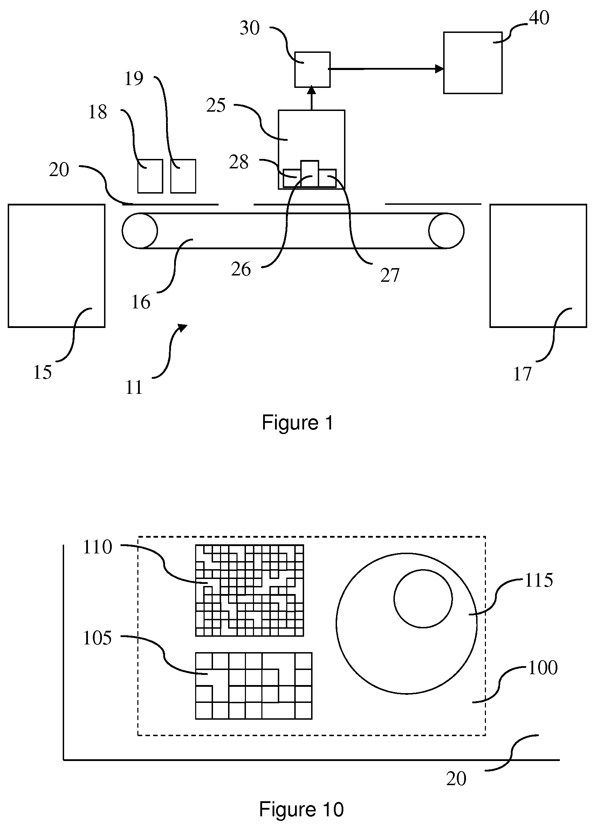

On observe, en figure 1, un mode de réalisation du dispositif de marquage 11 objet de la présente invention adapté à une machine traitant des produits à marquer 20 qui ont pu être imprimés en d'autres sites ou à d'autres dates. Dans d'autres modes de réalisation, ce dispositif 11 objet de la présente invention est adapté à une chaîne d'impression et traite les produits dès l'impression initiale de leur surface externe ou dans leur épaisseur.

Par exemple, le produit à marquer 20 est une étiquette ou un emballage pour un produit industriel.

Le dispositif d'identification de produits 11 comporte :

- un dépileur 15, connu en soi, qui dépile des produits 20,

- un convoyeur 16, de type connu,
- un empileur 17 qui forme une pile des produits 20 traitées par le dispositif 11,
- un moyen 18 de formation, sur ou dans ledit produit, d'une marque robuste à la copie, avec une première résolution,
- un moyen 19 de formation, sur ou dans ledit produit, d'une marque fragile à la copie, avec une deuxième résolution supérieure à la première résolution,
- un moyen 25 de capture d'une image de la marque robuste, de la marque fragile à la copie et d'une autre partie du produit (voir figure 10), sur chaque produit 20,
- un moyen 30 de génération d'une empreinte individuelle, variable d'un produit à un autre et fonction de l'image fournie par le moyen de capture 25 et
- un moyen 40 de mise en mémoire distante pour stocker ladite empreinte correspondant, individuellement, au produit 20, par exemple une base de données.

Dans le cas où la présente invention est adaptée à une chaîne d'impression, le dépileur 15 est en amont de la chaîne d'impression et ce n'est qu'après impression que les produits 20 portent, d'une part, une marque robuste et, d'autre part, une marque fragile à la copie, ou anti-copie.

Dans des modes de réalisation, la marque anti-copie est un CNA comme exposé ci-dessus.

Le moyen 25 de capture d'image comporte une caméra 26 et au moins une source de lumière 27, éventuellement par rétro-éclairage si la marque anti-copie est formée dans l'épaisseur du produit 20 ou si le produit 20 est suffisamment transparent pour au moins une longueur d'onde lumineuse. Le moyen de capture d'image 25 comporte aussi un moyen de détection 28 d'arrivée d'un produit 20, par exemple une cellule optoélectronique placée, sur le chemin suivi par les produits 20, en amont du moyen de lecture 25.

Le moyen de génération d'empreinte 30 effectue un traitement de l'image captée par la caméra 26, qui détermine des caractéristiques de l'image de la marque robuste, de la marque fragile à la copie et d'une partie du produit 20. Ainsi, pour réaliser l'appairage entre le produit et l'empreinte qui est générée individuellement pour chaque produit 20, un système de vision lit en dynamique une image de la partie du produit qui porte les marques robuste et fragiles à la copie, puis transmet l'information au moyen de génération 30 de l'empreinte.

Dans des modes de réalisation, l'empreinte est formée d'une partie de l'image captée préférentiellement normalisée en proportion des dimensions des marques robuste et fragile. Dans d'autres modes de réalisation, tels que ceux détaillés ci-dessous, on effectue un traitement d'une partie de l'image captée entourant les marques robuste et fragile.

Par exemple, comme illustré en figure 10, la partie d'image 100 traitée correspond à trois fois la hauteur de la marque robuste 105 sur trois fois la largeur de la marque robuste 105 et est centrée sur le coin inférieur droit de la marque fragile 110. Cette partie d'image comporte une autre partie 115 du produit, par exemple un logo ou une écriture dont la position est, préférentiellement, variable par rapport aux marques robuste et fragile, d'un produit 20 à un autre.

On donne, ci-dessous, un exemple de méthode pour la génération de l'empreinte.

- à partir du sous-ensemble « ICNA » des informations de l'image, on calcule une valeur associative « VA » par une fonction de calcul de valeur associative « F », ou d'une fonction « F' » qui utilise optionnellement un ou plusieurs autres paramètres dénotés « K »,
- on obtient un horodatage « T »,
- on obtient un identifiant « ID » de la machine génératrice d'empreintes,
- on obtient une clé de chiffrement « KCV » de l'empreinte,
- avec une fonction « CONC », on concaténe, de préférence en représentation binaire, « VA », « T » et « ID » pour obtenir la concaténation « C » et
- on chiffre la concaténation « C » avec une fonction de chiffrement « ENCRYPT » et la clé de chiffrement KCV, pour obtenir « CENC ».

En ce qui concerne la fonction « F », celle-ci est, de façon non limitative, une fonction qui calcule une valeur « VA » à partir du sous-ensemble « ICNA ».

En ce qui concerne la fonction « F' », dans le cas où on utilise la fonction « F' » avec paramètre(s) « K », « F' » peut être, par exemple, une fonction de chiffrement (par exemple connue sous le nom de « Triple-DES » ou d' « AES »). « F' » peut également être une fonction de hachage en combinaison avec une clé, ici le paramètre « K » qui doit être tenu secret.

En ce qui concerne la fonction « CONC », les valeurs « VA », « T » et « ID » peuvent être des entiers ou avoir une valeur appartenant à un ensemble déterminé (par exemple il existe quatre machines génératrices d'empreintes, donc quatre valeurs possibles pour « ID »). Dans le second cas, on détermine le nombre de bits nécessaires pour représenter l'ensemble des valeurs possibles. Dans le premier, les entiers sont en général représentés sur un ensemble déterminé d'octets.

En ce qui concerne la fonction « ENCRYPT », elle peut être une fonction de chiffrement symétrique, par exemple connus sous le nom de « Triple DES », « AES » ou « RC4 » ou une fonction de chiffrement asymétrique, par exemple connue sous le nom de « RSA ».

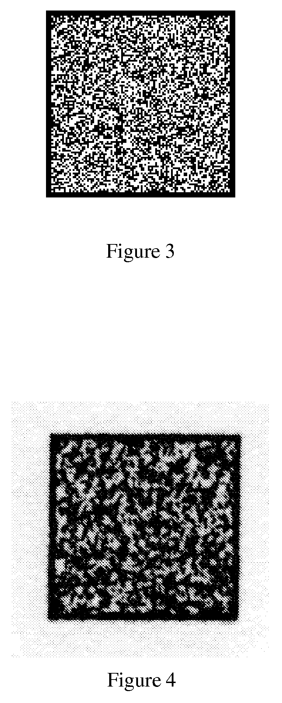

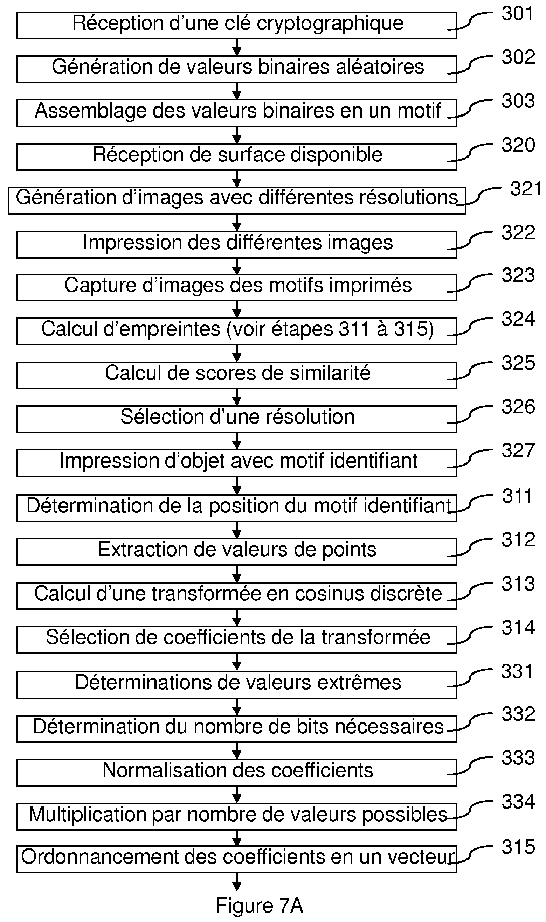

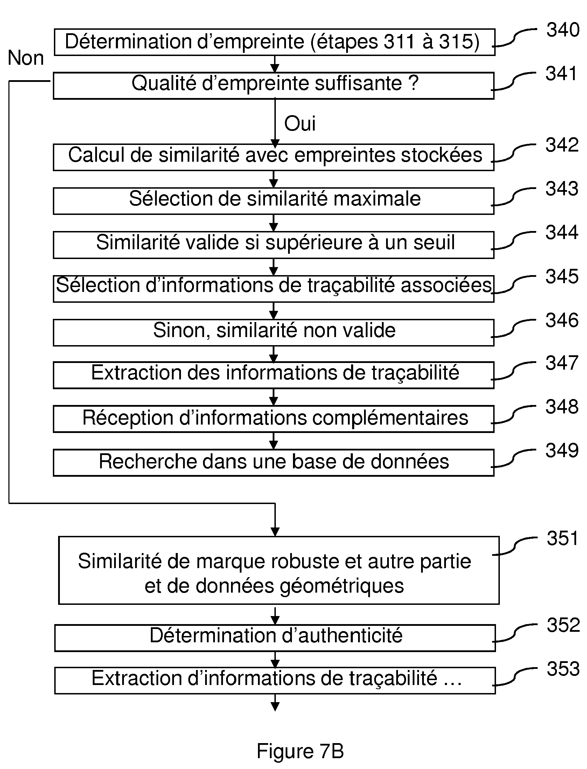

Dans les modes de réalisation de la présente invention décrits ci-dessous en regard des figures 3 à 8, on met en oeuvre :

- des étapes 301 à 303 de conception numérique des marques robuste et fragile,
- des étapes 311 à 314 de calcul d'empreinte,
- des étapes 320 à 326 d'optimisation de l'impression des marques et
- des étapes 331 à 334 de stockage en mémoire distante d'empreintes ou caractéristiques uniques de produits.

En ce qui concerne la conception numérique d'une marque fragile et la détermination des paramètres d'impression d'une marque fragile, à l'origine de certaines caractéristiques particulières de la présente invention, il a été découvert que, si l'on imprime plusieurs fois une même image source d'une matrice d'information sécurisée, celle-ci sera affectée d'erreurs différentes à chaque impression. Le même effet a également été constaté pour les motifs de détection de copie. De manière plus générale, il a été constaté que, pour toute image possédant une densité suffisante :

- l'impression de l'image résultera en une dégradation de l'image, et
- l'impression sera affectée d'une dégradation différente à chaque impression.

Pour être plus précis, ce phénomène n'est pas limité aux codes numériques authentifiants CNA. En effet, quelle que soit la densité d'une image numérique, chacune des impressions de celle-ci différera de toutes les autres impressions, étant donnés les processus aléatoires à l'oeuvre durant l'impression. Cependant, pour des images de faibles densités, les différences seront beaucoup moins nombreuses et significatives. Il faut alors une résolution de capture beaucoup plus importante afin de capter les différences qui sont parfois minimes. A l'inverse, pour les codes numériques authentifiants imprimés avec la résolution adéquate il n'est pas nécessaire d'utiliser une résolution de capture particulièrement élevée (un scanner à 1 200 points par pouce se révèle suffisant). De plus, comme les différences sont très significatives, l'extraction des caractéristiques uniques ne doit pas être faite avec une précision très élevée, ce qui est avantageux au niveau du coût et de la stabilité des algorithmes de lecture.

Les marques fragiles à la copie, ou motifs identifiants, sont des images conçues et imprimées de façon à maximiser les différences entre chaque impression d'un même motif identifiant source. Ces images sont préférentiellement conçues de manière pseudo-aléatoires (par exemple avec une ou plusieurs clés cryptographiques), mais elles peuvent être complètement aléatoires (la différence étant que, dans le deuxième cas, il n'existe pas de clé cryptographique, ou la clé n'est pas conservée). Cependant, on note que le motif identifiant numérique d'origine peut être connu sans compromettre la sécurité. En effet, seul le motif identifiant répertorié (ayant leur empreinte) en mémoire est légitime, et il n'est, par principe, pas possible de contrôler les aléas de l'impression. Donc, la possession de l'image d'origine ne donne pas d'avantage réel au contrefacteur : ceci est un autre avantage, en termes de sécurité, des motifs identifiants.

Comme les dégradations sont de nature aléatoire et produisent un résultat différent pour chaque impression d'une même image source, chaque impression d'un motif identifiant recèle des caractéristiques uniques, non reproductibles et non transférables. Ainsi, chacune des impressions d'un même motif identifiant diffère de toutes les autres, et recèle donc intrinsèquement les moyens de l'identifier sans équivoque. On peut donc calculer une empreinte d'un motif identifiant, et l'utiliser de différentes façons afin d'augmenter la sécurité du produit qui la contient, notamment en modes identification et vérification.

Les motifs identifiants peuvent être de simples rectangles, éventuellement encadrés d'une bordure facilitation leur détection, mais peuvent également avoir une forme particulière, tel qu'un logo, etc. Cependant, la forme rectangulaire se révèle avantageuse du point de vue de la lecture (elle est facilement repérable) et de sa compatibilité avec les formes habituelles des codes numériques authentifiants ou autre codes tels que le code barre en une ou deux dimensions.

On décrit, ci-dessous, un algorithme de conception d'un motif identifiant :

- au cours d'une étape 301, on reçoit une clé cryptographique, par exemple une séquence de 32 octets (256 bits),
- au cours d'une étape 302, en utilisant une fonction de hachage ou de chiffrement de manière récursive, l'algorithme étant initialisé avec la clé cryptographique, on génère le nombre requis de bits aléatoires. Le lecteur pourra s'inspirer des normes FIPS (acronyme de « Federal information processing standard » pour standard de traitement d'information fédéral) et AES (acronyme de « Advanced Encryption Standard » pour standard de chiffrement avancé) et
- au cours d'une étape 303, on assemble les bits en une image, par exemple de 100 x100 points, éventuellement complétée par une bordure.

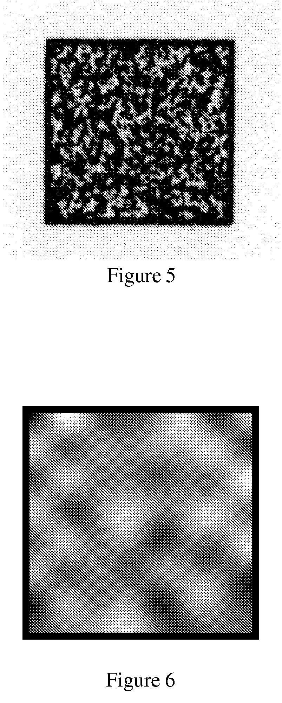

La Figure 3 montre un tel motif identifiant, avant l'impression. Les Figures 4 et 5 montrent deux impressions différentes du motif identifiant illustré en figure 3.

Les codes numériques authentifiants (ou « anti-copie ») sont des images conçues et imprimées de façon à maximiser les différences entre l'impression originale et une copie obtenue en utilisant une capture d'une image de l'impression originale et une seconde impression de cette image mettant en oeuvre les mêmes valeurs de paramètres d'impression, notamment en termes de résolution, que la première impression.

Les fonctionnalités d'un code numérique authentifiant peuvent être combinées à celles d'un motif identifiant, car les caractéristiques de conception et d'impression des codes numériques authentifiants sont proches de celles requises pour les motifs identifiants. Par exemple, les algorithmes de conception des motifs de détection de copie, qui nécessitent une clé cryptographique, s'apparentent à l'algorithme décrit précédemment, bien que le but recherché soit très différent. Les algorithmes de conception des matrices d'information sécurisées, eux, nécessitent à la fois une ou plusieurs clés cryptographiques, et un ou plusieurs messages. Le résultat est cependant similaire, soit une image aux valeurs pseudo aléatoires.

Comme on le verra plus loin, il s'avère que les conditions idéales d'impression des motifs identifiants sont proches des conditions idéales d'impression des codes numériques authentifiants. Ainsi, il est possible, autant sur le plan de la conception que du résultat imprimé, de combiner les fonctionnalités des codes numériques authentifiants à celle des matrices d'information.

En ce qui concerne les méthodes d'extraction et, lors de la vérification d'un produit, de comparaison, de l'empreinte d'un motif identifiant, on décrit, d'abord, ci-dessous une méthode d'extraction et de comparaison d'empreinte générique, qui consiste à extraire les valeurs d'un ensemble de points d'un motif identifiant capturé :

- au cours d'une étape 311, on détermine la position des marques robuste 105 et fragile 110 dans l'image du produit marqué. Pour des marques de formes rectangulaires, on peut, par exemple, extraire les positions (hauteur, largeur) des quatre extrémités de chaque marque, Puis, on détermine la zone d'intérêt 100 dans l'image captée,
- au cours d'une étape 312, pour un nombre déterminé de points à extraire, on détermine la position dans l'image capturée et extraire la valeur de chacun des points. La détermination de la position des points peut se faire en utilisant des techniques géométriques standards, connues de l'art antérieur. Les valeurs obtenues pour chaque point du capteur d'image sont, par exemple, sur une échelle de 0 à 255, de même que l'image capturée. Comme les positions peuvent être fractionnaires, la valeur du point prise peut être celle « du plus proche voisin », méthode peu coûteuse mais peu précise ou une valeur interpolée. Le résultat est une matrice 256 x 256 de valeurs entières (plus proche voisin) ou en virgule flottante (interpolation),
- au cours d'une étape 313, on calcule les transformées en cosinus discrètes en deux dimensions de
- la matrice de points correspondant à la marque robuste 105,
- la matrice de points correspondant à la marque fragile 110 et
- la matrice de points correspondant à la partie d'image prédéterminée 115.

La transformée en cosinus discrète est avantageuse car elle permet de compresser fortement l'énergie du signal sur un faible nombre de composants. Au cours de cette même étape 313, on détermine les ratios des distances des centres des éléments 105, 110 et 115 ou les angles du triangle qu'ils forment.

- au cours d'une étape 314, on sélectionne un nombre déterminé de coefficients de chaque transformée, par exemple les 10 x 10 coefficients de fréquence la plus basse, et éventuellement éliminer le coefficient constant, connu sous le nom de coefficient « DC » à la position (0,0) puis on réordonne les coefficients en un vecteur, qui constitue l'empreinte de la matrice d'information sécurisée.

On note que la méthode décrite précédemment ne met en oeuvre aucun secret, et, par conséquent, permet à quiconque de calculer l'empreinte. Ceci peut être souhaitable dans certains cas, où on considère que cela ne pose pas de risque de sécurité. Par contre, dans d'autres cas, il est souhaitable que seules les personnes autorisées puissent calculer l'empreinte. Pour cela, on met en oeuvre une clé cryptographique tenue secrète qui permet de déterminer les coefficients constituants l'empreinte. Cette clé n'est divulguée qu'aux personnes ou entités autorisées à reconstituer l'empreinte. Des techniques issues de l'art antérieur sont disponibles à l'homme du métier afin de sélectionner les coefficients à partir de la clé, mettant généralement en oeuvre un algorithme de hachage ou un algorithme de chiffrement.

Deux empreintes correspondant à des captures distinctes peuvent alors être comparées de multiples manières, afin d'obtenir une mesure de similarité ou, inversement, une mesure de distance. En mesurant, par exemple, un coefficient de corrélation entre elles, on obtient une mesure de similarité, que l'on dénommera « score » par la suite.

On note que, même si l'image de la marque fragile 110 est inexploitable, les autres éléments de l'empreinte, 105 et 115 ainsi que les relations géométriques (ratios de distances ou angles) permettent d'estimer l'authenticité du produit 20 dont une image a été captée, par comparaison avec les parties correspondantes des empreintes mémorisées à distance.

Pour valider cette méthode d'extraction de caractéristiques uniques, on a généré un motif identifiant de 100 x 100 pixels que l'on a imprimé 100 fois, sur une imprimante laser à 600 points par pouce. Un scanner « flatbed » à 1200 points par pouce a été utilisé pour réaliser trois captures de chaque motif identifiant imprimé. On a ensuite calculé une empreinte pour chacune des 300 captures effectuées. On mesure alors un score pour chacun des 44 850 couples d'empreintes (nombre calculé comme suit : 300*(300-1)/2). On sépare ces 44 850 couples d'empreinte en deux groupes :

- un groupe « A » de 600 couples d'empreintes correspondant à différentes captures du même motif identifiant imprimé et
- un groupe « B » de 44 250 couples d'empreintes correspondant à des captures de différents motifs identifiants imprimés.

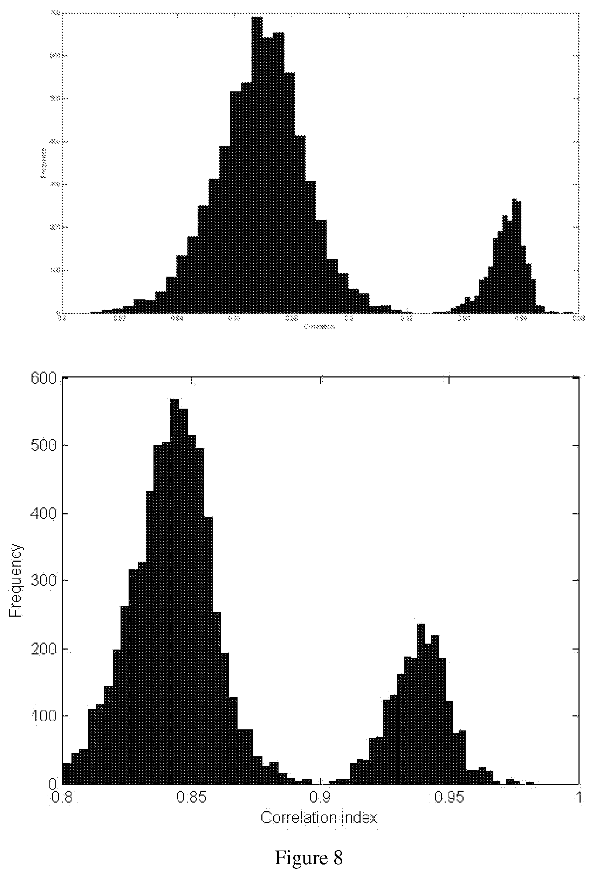

Le score est compris entre 0,975 et 0,998 pour le groupe « A », et est compris entre 0,693 et 0,945 pour le groupe « B ». La Figure 8 montre la distribution des scores pour le groupe « A » et pour le groupe « B ». Sur la base de ces scores, il n'y a aucune confusion possible entre les couples des deux groupes. Ainsi, en utilisant la méthode de calcul d'empreinte décrite précédemment, on peut déterminer sans ambiguïté laquelle des 100 impressions est à l'origine de l'image capturée.

On mesure un « degré de séparation des empreintes », qui consiste à calculer la différence des moyennes des scores pour les groupes « A » et « B » (ici respectivement de 0,992 et 0,863) et à la normaliser par l'écart type des scores du groupe « A », ici de 0,005. On obtient une valeur de 25,8. Comme on le verra plus bas, cet index est utile pour déterminer les paramètres d'impressions et de conceptions donnant les meilleurs résultats.

On décrit, ci-dessous, une deuxième méthode d'extraction d'empreinte concernant les matrices d'information sécurisées. Cette méthode, qui s'applique en particulier lorsque le motif identifiant a également les fonctionnalités d'une matrice d'information sécurisée. Il y est expliqué comment le message brouillé d'une matrice d'information sécurisée captée est extrait. Ce message brouillé possède un taux d'erreur non-nuls et la structure des erreurs est utilisée comme empreinte.

Un avantage de cette méthode est qu'elle permet d'utiliser un logiciel conçu pour la lecture des matrices d'information sécurisées, Cela minimise le coût des calculs nécessaires.

Cependant, la lecture précise d'une matrice d'information sécurisée nécessite la clé servant à générer les blocs d'aligner, s'il y a lieu. On ne souhaite pas forcément divulguer cette clé dans tous les cas. De plus, les variations d'alignement interne, spécifiques à chaque impression sont autant que possibles éliminées. Ceci n'est pas forcément souhaitable, car ces variations participent à la différenciation des différentes impressions d'une matrice d'information sécurisée.

En ce qui concerne la méthode de détermination des paramètres de génération et d'impression optimaux des motifs identifiants, il existe un taux de dégradation optimal permettant de séparer le plus aisément possible les différentes impressions d'un même motif identifiant source. Ainsi, si le taux de dégradation à l'impression est très faible, par exemple 1% ou 2% (1 ou 2% des cellules ou pixels du motif identifiant sont mal lues à partir d'une capture parfaite), les différentes impressions d'un même motif identifiant sont très proches l'une de l'autre, et il est difficile de les identifier de manière fiable, à moins d'avoir une capture très précise de l'image et/ou un algorithme d'analyse très précis. Similairement, lorsque le taux de dégradation est très élevé, par exemple 45 à 50 % (45 ou 50 % des cellules de la matrice d'information sécurisée sont mal lues à partir d'une capture parfaite, 50 % signifiant qu'il n'y a aucune corrélation statistique entre la matrice lue et la matrice d'origine), les motifs identifiants imprimées sont quasi indistinctes les unes des autres. En réalité, le taux de dégradation optimal est proche de 25 %, et si les conditions de l'application le permettent, il est préférable de s'en approcher. En effet, pour 25 % de dégradation, en supposant que les variations d'impression et donc les dégradations soient de nature probabiliste, on maximise, en chacun des points du motif identifiant imprimé, les chances qu'il diffère des autres motifs identifiants imprimés.

On donne, ci-dessous, un deuxième analyse des taux d'erreur à rechercher au moment de la génération d'une image à imprimer en fonction des moyens d'impression à mettre en oeuvre.

Afin de déterminer comment on peut générer des MPCV permettant d'optimiser la détection de copie, nous présentons ci-dessous un modèle basé sur la théorie de la décision. Les caractéristiques mesurées sur les images (ou points) sont représentées par des signaux. Pour simplifier l'analyse, on y fait l'hypothèse que les signaux numériques, avant impression, ont des valeurs binaires, correspondant à des caractéristiques pouvant avoir des valeurs binaires (par exemple deux tailles de points, deux positions, etc.). Cette hypothèse se justifie par le fait que la plupart des procédés d'impression traitent des images binaires. Evidemment, les conclusions de l'analyse peuvent être étendues à des cas plus complexes, notamment avec plusieurs valeurs possibles de caractéristiques de point. L'impression du MPCV est modélisée par l'ajout de bruit gaussien. Il est également supposé que les copies sont réalisées avec le même procédé d'impression, de sorte que l'impression de la copie est modélisée également par l'ajout de bruit gaussien de même énergie. De plus, le contrefacteur, qui capte le signal avant d'en imprimer une copie est forcé de reconstruire un signal binaire en faisant un estimé de la valeur initiale qui minimise sa probabilité d'erreur.

Ce modèle correspond directement à des MPCV pouvant avoir des tailles de point de 1 x1 pixel ou 1x2 pixels (imprimé, par exemple, à 2 400 dpi), pour lequel le contrefacteur doit nécessairement choisir une des tailles de point dans l'image reconstruite à partir d'un scan, en fonction d'un niveau de gris mesuré ou d'une surface estimée du point. Le modèle correspond également à des MPCV avec des positions variant de 1 pixel, par exemple.

A partir de ce modèle, nous dérivons le détecteur optimal, la distribution statistique des valeurs du détecteur, et les valeurs de paramètre qui maximisent la détection de copie.

Le tableau suivant résume les différentes variables.

| s | Signal source |
|---|---|
| $n, n_c$ | Bruit, bruit copie |
| x | Signal reçu |

Sans perte de généralité, le signal source est équiprobable, c'est-à-dire $s[i] : \{+a,-a\}$, pour $i = 0,1,..., N$-1, et $a > 0$. Le bruit d'impression est distribué selon une loi gaussienne $N(0,\sigma^2)$.

Les hypothèses du modèle se résument ainsi:

$$(H0)x[i] : \{+a,-a\} \tag{1}$$

$$(H1)n[i] : N(0,\sigma^2) \tag{2}$$

$$(H2)n_c[i] : N(0,\sigma^2) \tag{3}$$

On peut facilement vérifier que le contrefacteur minimise sa probabilité d'erreur en restaurant le signal à la valeur la plus proche entre +a,-a.

Par conséquent, le problème de détection consiste à distinguer les deux hypothèses suivantes :

$$H_0 : x[i] = s[i] + n[i] \tag{4}$$

$$H_1 : x[i] = a.sign(s[i] + n[i]) + n_c[i] \tag{5}$$

où $H_0$ et $H_1$ sont les hypothèses que le signal reçu est un original, respectivement, une copie.

La probabilité que le contrefacteur a correctement estimé la valeur est :

$$p(sign(s[i] + n[i]) = s[i]) = p(s[i] + n[i] > 0) \tag{6}$$

$$= p(N(a,\sigma^2) > 0) \tag{7}$$

$$= p(N(0,1) > -a/\sigma) \tag{8}$$

$$= Q(-a/\sigma) \tag{9}$$

où $Q(x) = (2\pi)^{-1/2} \int_{-a/\sigma}^{+\infty} \exp^{-x^2/2} dx$.

Nous avons les distributions de probabilité suivantes pour le signal reçu, où dans l'hypothèse $H_1$ nous avons une mixture de deux distributions Gaussiennes.

$$p(x;H_0) = \frac{1}{(2\pi\sigma^2)^{N/2}} \exp[-\frac{1}{2\sigma^2} \sum_{n=0}^{N-1}(x[n] - s[n])^2] \tag{10}$$

$$p(x; H_1) = (1 - Q(-a/\sigma)) \frac{1}{(2\pi\sigma^2)^{N/2}} \exp[-\frac{1}{2\sigma^2} \sum_{n=0}^{N-1} (x[n] + s[n])^2] + \quad (11)$$

$$Q(-a/\sigma) \frac{1}{(2\pi\sigma^2)^{N/2}} \exp[-\frac{1}{2\sigma^2} \sum_{n=0}^{N-1} (x[n] - s[n])^2] \quad (12)$$

Nous allons vérifier qu'un simple corrélateur donne une fonction de classification optimale. Un test de Neyman-Pearson detector decide $H_1$ si le rapport de vraisemblance excède un seuil t:

$$L(\mathbf{x}) = \frac{p(\mathbf{x}; H_1)}{p(\mathbf{x}; H_0)} > t \quad (13)$$

Le rapport de vraisemblance est donné par:

$$L(\mathbf{x}) = Q(-a/\sigma) + (1 - Q(-a/\sigma)) \exp[-\frac{1}{2\sigma^2} (\sum_{n=0}^{N-1} (x[n] + s[n])^2 + \frac{1}{2\sigma^2} \sum_{n=0}^{N-1} (x[n] - s[n])^2] \quad (14)$$

Prenant le logarithme, et un nouveau seuil $t'$, on obtient :

$$T'(x, s) = \sum_{n=0}^{N-1} x[n]s[n] < t' \quad (15)$$

La fonction de classification est donc un simple corrélateur T', dont la valeur doit être inférieure à un seuil t' pour classifier le signal comme copie.

Déterminons les statistiques de T' pour les deux hypothèses. Nous pouvons supposer que T' suit une gaussienne (vrai pour N élevé)dont nous nous dérivons les moyennes et variances pour les deux hypothèses :

$$E[T'; H_0] = Na^2 \quad (16)$$

$$E[T'; H_1] = Q(-a/\sigma)Na^2 - (1 - Q(-a/\sigma))Na^2 = (2Q(-a/\sigma) - 1)Na^2 \quad (17)$$

$$Var[T'; H_0] = Na^2\sigma^2 \quad (18)$$

$$Var[T'; H_1] = N(a^2\sigma^2 + a^4 Q(-a/\sigma)(1 - Q(-a/\sigma))) \quad (19)$$

Le deuxième terme de la variance pour l'hypothèse $H_1$, ($a^4 Q(-a/\sigma)(1-Q(-a/\sigma))$), peut être éliminé si les copies viennent du même original. En pratique, le contrefacteur minimise son travail en n'utilisant qu'un original pour produire un grand nombre copies, il est raisonable d'éliminer le terme.

Dans le cas où les variances sont égales, on peut caractériser la performance de détection par le coefficient de déflection $d^2$, qui correspond à la différence entre les moyenne de la fonction T' pour les deux hypothèses, normalisée par la variance de T' :

$$d^2 = \frac{(E[T';H_0] - E[T';H_1])^2}{Var[T';H_0]} \tag{22}$$

$$= \frac{2N^2 a^4 (1 - Q(-a/\sigma))^2}{Na^2 \sigma^2} \tag{23}$$

$$= \frac{2Na^2 (1 - Q(-a/\sigma))^2}{\sigma^2} \tag{24}$$

$$= 2N(\gamma(1 - Q(\gamma))^2 \tag{25}$$

où $\gamma = a/\sigma$ est la racine carrée du rapport signal sur bruit.

La performance de détection croissant avec le coefficient de déflection, l'objectif est de déterminer la valeur de $\gamma$ maximisant l'expression $(\gamma(1 - Q(\gamma))^2$.

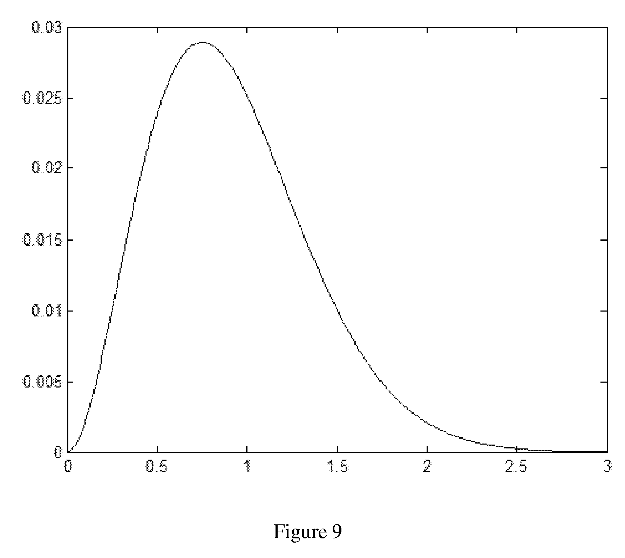

La Figure 9 représente la valeur de l'expression an fonction de $\gamma$. On peut interpréter cette figure comme suit. Les valeurs de $\gamma$ proche de zéro correspondent à un bruit très élevé par rapport au signal : lorsque le bruit est très élevé, le signal est trop dégradé dès la première impression, le contrefacteur introduit un nombre d'erreurs d'estimation trop faible. A l'inverse, pour des valeurs de $\gamma$ trop élevées, le signal n'est pas suffisamment dégradé, et dans une trop grande proportion des cas le contrefacteur n'introduira pas d'erreur d'estimation. Entre les deux extrêmes, l'expression passe par une valeur optimale, dont on estime numériquement la valeur à $\gamma \approx 0.752$.

Il est intéressant de noter que pour cette valeur, la probabilité que le contrefacteur n'ait pas déterminé correctement la valeur, est d'environ 22,6%.

En pratique, il s'agit d'obtenir un rapport signal sur bruit $\gamma^2$ aussi proche que possible de $0,752^2$, soit 0,565.

Prenons un exemple pour mieux comprendre comment viser cette valeur de rapport. Supposons que nous générons un MPCV avec deux tailles de point (exprimées en nombre de pixels) possibles, la taille de point étant de l'ordre de neuf pixels (par exemple, 3x3 pixels). On note que la taille de point peut être mesurée en mettant en oeuvre une multitude d'algorithmes, par exemple par seuillage adaptatif local du niveau de gris et dénombrement des pixels en dessous du seuil. On imprime un nombre suffisant de fois des points de neuf pixels. On mesure, dans une image capturée, la moyenne et l'écart-type du nombre de pixels de chaque point. Supposons qu'on obtient une moyenne de douze (on observe un gain physique moyen de 33 %), et un écart-type de quatre. Cet écart-type correspond à la valeur $\sigma$ décrivant le bruit dans les formules de notre modèle. On visera alors une valeur de notre signal $a$ de l'ordre de trois, pour obtenir un rapport $\gamma = 0.75$, soit très près de l'optimum. Pour obtenir cette valeur de signal, on peut par exemple définir deux tailles de points de quinze et de six pixels.

On décrit, ci-dessous, un algorithme possible d'optimisation des paramètres d'impression :

- au cours d'une étape 320, on reçoit la surface disponible pour le motif identifiant, par exemple un carré dont le côté mesure 1/6 de pouce,
- au cours d'une étape 321, on génère plusieurs images numériques de motifs identifiants de dimensions numériques différentes, correspondant aux différentes résolutions d'impression possibles, par exemple un motif identifiant de 66 x 66 pixels à 400 points par pouce, un de 100 x 100 pixels à 600 points par pouce, un de 133 x 133 pixels à 800 points par pouce , un de 200 x 200 pixels à 1200 points par pouce,
- au cours d'une étape 322, on imprime plusieurs fois chacun des motifs identifiants de dimensions numériques différentes, par exemple 100 fois, avec la résolution adéquate de façon à ce que les dimensions de l'impression correspondent à la surface disponible.
- au cours d'une étape 323, pour chaque type, on capture plusieurs fois chacun des motifs identifiants imprimés, par exemple trois fois,
- au cours d'une étape 324, on calcule l'empreinte de chaque motif identifiant,
- au cours d'une étape 325, on calcule les scores de similarité pour toutes les paires de motif identifiant capturés de même résolution d'impression et
- au cours d'une étape 326, on suit la méthode décrite dans l'expérimentation de la méthode extraction d'empreinte générique exposée plus haut pour mesurer le « degré de séparation des empreintes », pour chacune des résolutions d'impression, et choisir la résolution d'impression donnant la valeur maximale de ce degré.

En variante, on imprime plusieurs matrices d'information sécurisées à différentes résolutions d'impression, et on détermine la résolution d'impression résultant en un taux d'erreur de 25 %, tel que calculé avec un des algorithmes décrits par ailleurs.

En variante, on choisit la résolution d'impression dont la différence est la plus élevée entre la plus basse valeur de score calculée sur la comparaison entre les empreintes correspondant à des impressions identiques, et la plus haute valeur de score calculée sur la comparaison entre les empreintes correspondant à des impressions différentes.

En ce qui concerne la méthode de représentation et stockage des caractéristiques, il est avantageux de réduire, autant que possible, le volume de données de l'empreinte. Dans le cas de l'identification, il s'agit de comparer une empreinte à un grand nombre d'empreintes stockées sur une base de données, ce qui est très coûteux. On réduit ce coût en réduisant la taille des empreintes à comparer, notamment en évitant d'utiliser des nombres en virgule flottante.

Prenons le cas de la méthode générique d'extraction d'empreinte. Le vecteur de données initial extrait d'un motif identifiant capté est la matrice de valeurs extraites 256 x 256, et sa représentation par une transformée en cosinus discrète après sélection de coefficients, possède 10 x 10 valeurs. Il est avantageux de représenter la matrice de valeurs avec un octet par valeur, soit 100 octets.

Au cours d'une étape 327, on imprime au moins un produit avec un motif identifiant pour former un produit sécurisé.

En revanche, les coefficients de la transformée en cosinus discrète peuvent prendre des valeurs tant positives que négatives, et ne sont en principe pas limitées. Afin de représenter de telles valeurs avec une quantité d'information fixée, les valeurs doivent être quantifiées afin d'être représentées en valeurs binaires. Une approche possible est la suivante :

- au cours d'une étape 331, on détermine, à l'avance, une valeur minimale et une valeur maximale pour chaque coefficient. En général, les valeurs minimales et maximales ont la même valeur absolue,
- au cours d'une étape 332, on détermine le nombre de bits ou octets permettant de représenter chaque valeur et
- au cours d'une étape de normalisation 333, pour chaque coefficient de la transformée en cosinus discrète, on soustrait la valeur minimale, puis on divise le reste par la valeur maximale,
- au cours d'une étape 334, on multiplie le résultat par le nombre de valeurs possible des données quantifiées, soit 256 si un octet est disponible pour chaque valeur. La valeur entière du résultat correspondant à la valeur d'origine quantifiée.

En variante, les pas de quantifications sont optimisés de façon à minimiser l'erreur de quantification.

Pour vérifier l'authenticité d'un produit, un consommateur prend une image comportant au moins la marque robuste, la marque fragile à la copie et une autre partie du produit.

Dans des modes de réalisation, on met en oeuvre les étapes suivantes :

- au cours d'une étape 340, on détermine l'empreinte de la marque fragile, ou motif identifiant, contenue dans l'image captée,
- au cours d'une étape 341, on détermine si cette empreinte est de qualité suffisante, par exemple, en déterminant combien de valeurs de l'empreinte sont supérieures une valeur prédéterminée (en effet, une image floue ou ne présentant pas une résolution suffisante aura pour ses coefficient de haute fréquence, des valeurs très faibles),
- si oui, au cours d'une étape 342, on calcule le score, ou similarité, de l'empreinte obtenue à l'étape 340, avec chacune des empreintes stockées dans la base de données distante 40,
- au cours d'une étape 343, on détermine la similarité maximale obtenue, en comparant l'empreinte calculée avec toutes les empreintes correspondant au même type de produit conservées à distance, par exemple dans une base de données,
- au cours d'une étape 344, si la similarité maximale est supérieure à une valeur seuil, le motif identifiant est jugé valide, c'est-à-dire que le produit 20 est authentique et, au cours d'une étape 345, on retrouve les informations de traçabilité associées,
- sinon, au cours d'une étape 346, le motif identifiant est jugé comme non-valide.

En variantes :

- au cours d'une étape 347, si le motif identifiant possède également les fonctionnalités d'un code numérique authentifiant, on extrait les informations de traçabilité,
- au cours d'une étape 348, les informations de traçabilité permettant de réduire l'espace de recherche peuvent également provenir d'une autre source, par exemple code barre associé, renseignement par le contrôleur, lecture de mémoire non volatile du produit, etc et
- au cours d'une étape 349, on exploite ces informations afin de réduire l'espace de recherche dans la base de données. Par exemple, l'information de l'ordre de fabrication permet d'effectuer une présélection des empreintes à comparer parmi le sous-ensemble d'empreintes correspondant à cet ordre de fabrication.

Si le résultat du test 341 est négatif, au cours d'une étape 351, on détermine la similarité de la marque robuste 105, de l'autre partie d'image 115 et des données géométriques (ratios de distances ou angles), comme exposé ci-dessus, en référence à la base de données 40. Puis, au cours d'une étape 352, on détermine si le produit 20 est authentique en fonction de la similarité maximale trouvée.

Au cours d'une étape 353, on effectue les étapes 347 à 349.

En ce qui concerne la méthode de vérification sans base de données, elle nécessite que l'empreinte pré-calculée du motif identifiant soit stockée sur le produit 20. Par exemple, lors de l'étape du calcul de l'empreinte de chacun des produits légitimes, celles-ci peuvent être à la fois destinées à être stockées dans une base de données 40, et à être stockées de manière sécurisée sur le produit 20 par exemple dans une marque robuste supplémentaire formée sur le produit 20.

En ce qui concerne un usage combiné d'un motif identifiant avec fonctionnalités d'un code numérique authentifiant, les méthodes de caractérisation unique des produits de l'art antérieur utilisent des caractéristiques non interprétables sans appel à une base de données. Par contre, si les motifs identifiants peuvent être de simples images sans significations, comme on l'a vu, ils peuvent également être des images comportant d'autres fonctionnalités. Notamment, ils peuvent être des codes numériques authentifiants, auquel cas ils peuvent comporter des informations sécurisées (une ou plusieurs clés sont nécessaires pour les lire), et/ou avoir des propriétés authentifiantes (distinguer un original d'une copie).

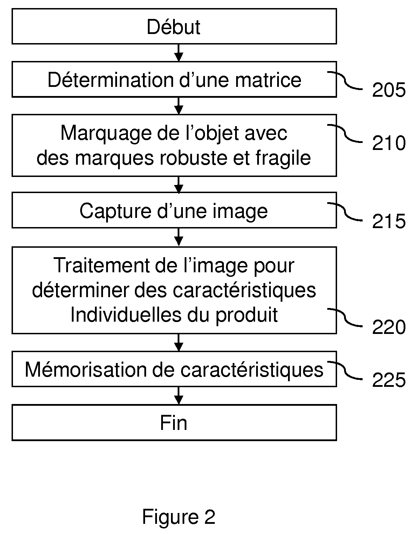

On observe, en figure 2 :

- une étape 205 de détermination d'une matrice de points représentative d'une information associée à un produit à authentifier,
- une étape 210 d'apposition au produit d'une marque robuste 105 et d'une marque 110 fragile à la copie, de telle manière que la marque fragile présente des erreurs imprévisibles du fait des caractéristiques physiques des moyens mis en oeuvre au cours de l'étape de marquage,
- une étape 215 de capture d'une image de la marque robuste 105, de la marque fragile 110 et d'une autre partie 115 du produit 20 (voir figure 10), avec éventuellement, une étape d'extraction de la partie 100 de l'image,
- une étape 220 de détermination de caractéristiques physiques de l'image ou de la partie d'image 100 par traitement d'image et
- une étape 225 de mémorisation, en mémoire distante, par exemple sur un serveur accessible par Internet, d'une information représentative des caractéristiques physiques des erreurs imprévisibles, ou empreinte.

Au cours de l'étape 205, on détermine les marques robuste 105 (par exemple un Datamatrix) et fragile à la copie 110 (par exemple un CNA ou un MPCV), par exemple sous la forme d'une matrice de zones comportant, chacune, des centaines de points et représentatives, pour au moins une partie, d'une information binaire. L'information associée au produit 20 dans l'une et/ou l'autre de ces marques 105 et 110 est, par exemple, le nom de son fabricant, l'ordre de fabrication du produit et/ou la date de fabrication.

Au cours de l'étape 210, on appose la marque robuste 105. On appose conjointement la marque fragile 110, formée d'une matrice de points, avec une résolution telle qu'au moins deux, préférentiellement au moins cinq, pour cent des points de la marque fragile à la copie 110 soient erronés, préférentiellement de manière individuellement imprévisible, en comparaison avec la matrice de points originale. Par exemple, on utilise la résolution maximale d'une imprimante. Cette résolution a, notamment, pour effet, que la copie du produit, qui impose une copie de la marque fragile à la copie 110, par exemple par des procédés optiques ou photographiques, augmente d'au moins cinquante pour cent le taux d'erreurs dans la marque copiée, en comparaison avec la marque initiale.

Préférentiellement, au cours de l'étape 210, les positions respectives de l'autre partie d'image 115 et d'au moins l'une des marques 105 et 110 est aléatoire.

Au cours de l'étape 220, on détermine, comme caractéristiques physiques ou empreinte du produit 20, des caractéristiques représentatives de la répartition des erreurs dans la marque fragile 110 et de la partie 115 du produit 20 extérieure aux marques 105 et 110. Par exemple, on détermine le vecteur allant du centre de la partie 115 au barycentre des erreurs portées par la marque fragile 110, puis on affecte les erreurs d'un poids dépendant de leur position et on détermine un nouveau vecteur et ainsi de suite sur plusieurs itérations. On effectue la même succession d'étapes sur la marque robuste 105 pour obtenir une empreinte indépendante de la marque fragile à la copie mais dépendant de la marque robuste 105 et de la partie 115 du produit 20.

Grâce à la mise en oeuvre de la présente invention, bien que le même processus de marquage soit mis en oeuvre, sans modification, par exemple par gravure ou impression, sur de nombreux produits 20, les caractéristiques physiques des marques et de l'élément 115 permettent de donner au moins une identification unique, ou empreinte, à chaque produit 20. A défaut, les éléments 105 et 115 et, éventuellement, des données géométriques, permettent d'estimer l'authenticité du produit 20.

Lorsqu'un consommateur veut vérifier l'authenticité du produit 20, une nouvelle capture d'image est effectuée par lui sur ce produit marqué 20. Un nouveau traitement d'image est appliqué et le résultat de ce traitement d'image est comparé à l'information mémorisée en mémoire distante pour vérifier l'authenticité du produit 20.

La quantité d'erreur est importante et permet une identification unique de la marque et du produit. Même au cas où l'image de la marque fragile à la copie n'est pas exploitable, en mettant en oeuvre des informations liées à la marque robuste 105 et à la partie 115 de l'image, on peut vérifier l'authenticité du produit 20.

La lecture des données relatives au produit qui porte la marque robuste 105 fournit une origine et/ou des moyens d'accès à une base de données de caractéristiques physiques des erreurs.

Quelles que soient les conditions de capture d'une nouvelle image de ladite marque, les caractéristiques du produit peuvent être retrouvées.

**Revendications**

1. Procédé de marquage de produit (20), **caractérisé en ce qu'**il comporte :

   - une étape de formation (210), sur ou dans ledit produit, d'une marque robuste (105) à la copie, avec une première résolution,
   - une étape de formation (210), sur ou dans ledit produit, d'une marque fragile (110) à la copie, avec une deuxième résolution supérieure à la première résolution,
   - une étape de capture (215) d'une image de ladite marque robuste, de ladite marque fragile et d'une autre partie (115) du produit et
   - une étape de mémorisation (225) d'une information représentative de l'image de ladite marque robuste, de ladite marque fragile et de ladite autre partie d'image.

2. Procédé selon la revendication 1, dans lequel ladite marque robuste (105) est un code à barres en deux dimensions.

3. Procédé selon l'une des revendications 1 ou 2, dans lequel ladite marque fragile (110) à la copie est un code numérique authentifiant, ledit procédé comportant une étape de détermination d'une information représentative des erreurs d'impression de ladite marque fragile à la copie et au cours de l'étape de mémorisation, on mémorise ladite information représentative des erreurs d'impression.

4. Procédé selon l'une des revendications 1 à 3, dans lequel, au cours de chacune des étapes de formation (210) de marques (105, 110), la position de ladite marque par rapport à un élément (115) du produit (20) est variable et, lors de l'étape de capture (215) d'une image, on capte une image dudit élément.

5. Procédé selon l'une des revendications 1 à 4, dans lequel, au cours des étapes de formation (210) de marques (105, 110), on décale, entre deux produits (20) différents, différemment les marques formées.

6. Dispositif de marquage (11) de produit (20), qui comporte :

   - un moyen de formation (18), sur ou dans ledit produit, d'une première marque,
   - un moyen de formation (19), sur ou dans ledit produit, d'une deuxième marque,
   - un capteur d'image (25) adapté à capter é une image de ladite première marque, de ladite deuxième marque et d'une autre partie du produit et
   - un moyen de mémorisation (40) d'une information représentative de l'image de ladite première marque, de ladite deuxième marque et de ladite autre partie d'image,

   **caractérisé en ce que** :

   - la première marque est une marque robuste (105) à la copie formée avec une première résolution et
   - la deuxième marque est une marque fragile (110) à la copie, formée avec une deuxième résolution supérieure à la première résolution.

7. Dispositif (11) selon la revendication 6, dans lequel, au moins l'un des moyens de formation (18, 19) est adapté à ce que la position de la marque (105, 110) formée par rapport à l'autre partie d'image, soit aléatoire.

**8.** Dispositif (11) selon l'une quelconque des revendications 6 ou 7, dans lequel le moyen de formation (18) de ladite marque robuste (105) est adapté à ce que ladite marque robuste soit un code à barres en deux dimensions.

**9.** Dispositif (11) selon l'une des revendications 6 à 8, dans lequel le moyen de formation (19) de ladite marque fragile (110) est adapté à ce que ladite marque fragile à la copie soit un code numérique authentifiant, ledit dispositif comportant un moyen de détermination d'une information représentative des erreurs d'impression de ladite marque fragile à la copie et le moyen de mémorisation étant adapté à mémoriser ladite information représentative des erreurs d'impression.

**10.** Dispositif (11) selon l'une des revendications 6 à 9, dans lequel, chacun des moyens de formation (18, 19) de marques (105, 110) est adapté à ce que la position de la marque par rapport à un élément (115) du produit est variable et le moyen de capture (26) d'une image est adapté à capter une image dudit élément.

**11.** Dispositif (11) selon l'une des revendications 6 à 10, dans lequel, chaque moyen de formation (18, 19) de marques (105, 110) est adapté à décaler différemment, entre deux produits (20) différents, les marques formées.

**12.** Procédé d'authentification de produit (20), **caractérisé en ce qu'**il comporte :

- une étape de capture (340), sur ledit produit d'une image d'une marque robuste (105) et d'une marque fragile (110) à la copie de résolution plus élevée que la marque robuste et d'une autre partie du produit,
- une étape de transmission d'une information représentative de l'image de ladite marque robuste, de ladite marque fragile et de ladite autre partie d'image,
- une étape de comparaison (343) de ladite information représentative de l'image de ladite marque robuste, de ladite marque fragile et de ladite autre partie d'image avec au moins une information mémorisée à distance et
- en fonction du résultat de ladite étape de comparaison, une étape d'affichage (345, 346) de données relatives au produit dont une image a été captée.

**13.** Procédé selon la revendication 12, dans lequel, au cours de l'étape de comparaison (343), on effectue, d'abord, une étape de détermination (341) de qualité de l'image de la marque fragile à la copie et :

- si la qualité est supérieure à une valeur prédéterminée, une comparaison (342) d'une information représentative de la marque fragile à la copie et,
- sinon, une comparaison (351) d'une information représentative de l'autre partie du produit.

**14.** Dispositif d'authentification de produit (20), **caractérisé en ce qu'**il comporte :

- un moyen de capture, sur ledit produit d'une image d'une marque robuste (105) et d'une marque fragile (110) à la copie de résolution plus élevée que la marque robuste et d'une autre partie du produit,
- un moyen de transmission d'une information représentative de l'image de ladite marque robuste, de ladite marque fragile et de ladite autre partie d'image,
- un moyen de comparaison de ladite information représentative de l'image de ladite marque robuste, de ladite marque fragile et de ladite autre partie d'image avec au moins une information mémorisée à distance et
- un moyen d'affichage de données relatives au produit dont une image a été captée, en fonction du résultat fourni par le moyen de comparaison.

**15.** Dispositif selon la revendication 14, dans lequel le moyen de comparaison est adapté à effectuer, d'abord, une étape de détermination de qualité de l'image de la marque fragile (110) à la copie et :

- si la qualité est supérieure à une valeur prédéterminée, une comparaison d'une information représentative de la marque fragile à la copie et,
- sinon, une comparaison d'une information représentative de l'autre partie du produit (20).

**Patentansprüche**

**1.** Verfahren zur Produktkennzeichnung (20), **dadurch gekennzeichnet, dass** es Folgendes umfasst:

- einen Schritt zur Bildung (210) auf oder im besagten Produkt einer kopiersicheren Kennzeichnung (105) mit einer ersten Auflösung,

- einen Schritt zur Bildung (210) auf oder im besagten Produkt einer nicht kopiersicheren Kennzeichnung (105) mit einer zweiten Auflösung, die höher ist, als die erste Auflösung,

- einen Schritt zum Erfassen (215) eines Bildes der besagten sicheren Kennzeichnung, der besagten nicht sicheren Kennzeichnung und eines weiteren Abschnitts (115) des Produkts und

- einen Schritt zum Speichern (225) einer repräsentativen Information über das Bild der besagten sicheren Kennzeichnung, der besagten nicht sicheren Kennzeichnung und des besagten weiteren Bildabschnitts.

2. Verfahren nach Anspruch 1, wobei die besagte sichere Kennzeichnung (105) ein zweidimensionaler Barcode ist.

3. Verfahren nach einem der Ansprüche 1 oder 2, wobei die besagte nicht kopiersichere Kennzeichnung (110) ein authentifizierender Digitalcode ist, wobei das besagte Verfahren einen Schritt zur Bestimmung einer repräsentativen Information über die Druckfehler der besagten nicht kopiersicheren Kennzeichnung umfasst, und man im Laufe des Speicherschrittes die besagte repräsentative Information über die Druckfehler speichert.

4. Verfahren nach einem der Ansprüche 1 bis 3, wobei im Laufe eines jeden der Schritte zur Bildung (210) von Kennzeichnungen (105, 110) die Position der besagten Kennzeichnung im Verhältnis zu einem Element (115) des Produkts (20) variabel ist, und man beim Schritt zum Erfassen (215) eines Bildes ein Bild des besagten Elements erfasst.

5. Verfahren nach einem der Ansprüche 1 bis 4, wobei man im Laufe der Schritte zur Bildung (210) von Kennzeichnungen (105, 110) die gebildeten Kennzeichnungen zwischen zwei verschiedenen Produkten (20) unterschiedlich verschiebt.

6. Vorrichtung zum Kennzeichnen (11) eines Produkts (20), Folgendes umfassend:

- ein Mittel zum Bilden (18) auf oder im besagten Produkt einer ersten Kennzeichnung,
- ein Mittel zum Bilden (19) auf oder im besagten Produkt einer zweiten Kennzeichnung,
- einen Bildsensor (25), der ausgeführt ist, um ein Bild der besagten ersten Kennzeichnung, der besagten zweiten Kennzeichnung und eines weiteren Abschnitts des Produkts zu erfassen und
- ein Mittel zum Speichern (40) einer repräsentativen Information über das Bild der besagten ersten Kennzeichnung, der besagten zweiten Kennzeichnung und des besagten weiteren Bildabschnitts,

**dadurch gekennzeichnet, dass**:

- die erste Kennzeichnung eine kopiersichere Kennzeichnung (105) ist, die mit einer ersten Auflösung gebildet wird und
- die zweite Kennzeichnung eine nicht kopiersichere Kennzeichnung (110) ist, die mit einer zweiten Auflösung gebildet wird, die höher ist, als die erste Auflösung.

7. Vorrichtung (11) nach Anspruch 6, wobei zumindest eines der Mittel zum Bilden (18, 19) derart ausgeführt ist, dass die Position der gebildeten Kennzeichnung (105, 110), die im Verhältnis zum weiteren Bildabschnitt gebildet wird, zufällig ist.

8. Vorrichtung (11) nach irgendeinem der Ansprüche 6 oder 7, wobei das Mittel zum Bilden (18) der besagten sicheren Kennzeichnung (105) derart ausgeführt ist, dass die besagte sichere Kennzeichnung ein zweidimensionaler Barcode ist.

9. Vorrichtung (11) nach einem der Ansprüche 6 bis 8, wobei das Mittel zum Bilden (19) der besagten nicht sicheren Kennzeichnung (110) derart ausgeführt ist, dass die besagte nicht kopiersichere Kennzeichnung ein authentifizierender Digitalcode ist, wobei die besagte Vorrichtung ein Mittel zur Bestimmung einer repräsentativen Information über die Druckfehler der besagten nicht kopiersicheren Kennzeichnung umfasst, und das Mittel zum Speichern ausgeführt ist, um die besagte repräsentative Information über die Druckfehler zu speichern.

10. Vorrichtung (11) nach einem der Ansprüche 6 bis 9, wobei jedes der Mittel zum Bilden (18, 19) von Kennzeichnungen (105, 110) derart ausgeführt ist, dass die Position der Kennzeichnung im Verhältnis zu einem Element (115) des Produkts variabel ist und das Mittel zum Erfassen (26) eines Bildes ausgeführt ist, um ein Bild des besagten Elements zu erfassen.

**11.** Vorrichtung (11) nach einem der Ansprüche 6 bis 10, wobei jedes der Mittel zum Bilden (18, 19) von Kennzeichnungen (105, 110) ausgeführt ist, um die gebildeten Kennzeichnungen zwischen zwei verschiedenen Produkten (20) unterschiedlich zu verschieben.

**12.** Verfahren zur Produktauthentifizierung (20), **dadurch gekennzeichnet, dass** es Folgendes umfasst:

- einen Schritt zum Erfassen (340) auf dem besagten Produkt eines Bildes einer kopiersicheren Kennzeichnung (105) und einer nicht kopiersicheren Kennzeichnung (110) mit einer höheren Auflösung als die sichere Kennzeichnung und eines weiteren Abschnitts des Produkts,
- einen Schritt zum Übertragen einer repräsentativen Information über das Bild der besagten sicheren Kennzeichnung, der besagten nicht sicheren Kennzeichnung und des besagten weiteren Bildabschnitts,
- einen Schritt zum Vergleichen (343) der besagten repräsentativen Information über das Bild der besagten sicheren Kennzeichnung, der besagten nicht sicheren Kennzeichnung und des besagten weiteren Bildabschnitts mit zumindest einer in der Ferne gespeicherten Information und
- in Abhängigkeit vom Ergebnis des besagten Schrittes zum Vergleichen, einen Schritt zum Anzeigen (345, 346) von Daten im Verhältnis zum Produkt, von dem ein Bild erfasst worden ist.

**13.** Verfahren nach Anspruch 12, wobei man im Laufe des Schrittes zum Vergleichen (343) zuerst einen Schritt zum Bestimmen (341) der Qualität des Bildes der nicht kopiersicheren Kennzeichnung durchführt und:

- falls die Qualität über einem vorbestimmten Wert liegt, einen Vergleich (342) einer repräsentativen Information über die nicht kopiersichere Kennzeichnung und
- ansonsten einen Vergleich (351) einer repräsentativen Information über den weiteren Abschnitt des Produkts.

**14.** Vorrichtung zur Produktauthentifizierung (20), **dadurch gekennzeichnet, dass** sie Folgendes umfasst:

- ein Mittel zum Erfassen auf dem besagten Produkt eines Bildes einer kopiersicheren Kennzeichnung (105) und einer nicht kopiersicheren Kennzeichnung (110) mit einer höheren Auflösung als die sichere Kennzeichnung und eines weiteren Abschnitts des Produkts,
- ein Mittel zum Übertragen einer repräsentativen Information über das Bild der besagten sicheren Kennzeichnung, der besagten nicht sicheren Kennzeichnung und des besagten weiteren Bildabschnitts,
- ein Mittel zum Vergleichen der besagten repräsentativen Information über das Bild der besagten sicheren Kennzeichnung, der besagten nicht sicheren Kennzeichnung und des besagten weiteren Bildabschnitts mit zumindest einer in der Ferne gespeicherten Information und
- ein Mittel zum Anzeigen von Daten im Verhältnis zum Produkt, von dem ein Bild erfasst worden ist, in Abhängigkeit vom Ergebnis, das vom Mittel zum Vergleichen bereitgestellt wurde.

**15.** Vorrichtung nach Anspruch 14, wobei das Mittel zum Vergleichen ausgeführt ist, um zuerst einen Schritt zum Bestimmen der Qualität des Bildes der nicht kopiersicheren Kennzeichnung (110) durchzuführen und:

- falls die Qualität über einem vorbestimmten Wert liegt, einen Vergleich einer repräsentativen Information über die nicht kopiersichere Kennzeichnung und
- ansonsten einen Vergleich einer repräsentativen Information über den weiteren Abschnitt des Produkts (20).

**Claims**

**1.** Method for marking a product (20), **characterized in that** it comprises:

- a step of forming (210), on or in said product, a mark (105) robust to copying with a first resolution;
- a step of forming (210), on or in said product, a mark (110) sensitive to copying with a second resolution, higher than the first resolution;
- a step of capturing (215) an image of said robust mark, of said sensitive mark, and of another part (115) of the product; and
- a step of memorizing (225) an item of information representative of the image of said robust mark, of said sensitive mark, and of said other part of the image.

**2.** Method according to claim 1, wherein said robust mark (105) is a two dimensional barcode.

**3.** Method according to one of claims 1 or 2, wherein said mark (110) sensitive to copying is a digital authentication code, said method comprising a step of determining an item of information representative of the print errors for said mark sensitive to copying and, during the step of memorizing, said item of information representative of the print errors is memorized.

**4.** Method according to one of claims 1 to 3, wherein, during each of the steps of forming (210) marks (105, 110), the position of said mark in relation to an element (115) of the product (20) is variable, and during the step of capturing (215) an image, an image of said element is captured.

**5.** Method according to one of claims 1 to 4, wherein, during the steps of forming (210) marks (105, 110), the marks formed are offset differently for two different products (20).

**6.** Device for marking (11) a product (20), which comprises:

   - a means for forming (18) a first mark on or in said product;
   - a means for forming (19) a second mark on or in said product;
   - an image sensor (25), designed to capture an image of said first mark, of said second mark, and of another part of the product; and
   - a means for memorizing (40) an item of information representative of the image of said first mark, of said second mark, and of said other image portion,

   **characterized in that**:

   - the first mark is a mark (105) robust to copying, formed with a first resolution; and
   - the second mark is a mark (110) sensitive to copying, formed with a second resolution, higher than the first resolution.

**7.** Device (11) according to claim 6, wherein at least one of the forming means (18, 19) is designed such that the position of the mark (105, 110) formed is random in relation to the other image portion.

**8.** Device (11) according to any one of claims 6 or 7, wherein the means for forming (18) said robust mark (105) is designed so that said robust mark is a two dimensional barcode.

**9.** Device (11) according to one of claims 6 to 8, wherein the means for forming (19) said sensitive mark (110) is designed so that said mark sensitive to copying is a digital authentication code, said device comprising a means for determining an item of information representative of the print errors for said mark sensitive to copying, and the means for memorizing being designed to memorize said item of information representative of the print errors.

**10.** Device (11) according to one of claims 6 to 9, wherein each of the means for forming (18, 19) marks (105, 110) is designed so that the position of the mark in relation to an element (115) of the product is variable, and the means for capturing (26) an image is designed to capture an image of said element.

**11.** Device (11) according to one of claims 6 to 10, wherein each means for forming (18, 19) marks (105, 110) is designed to offset the marks formed differently for two different products (20).

**12.** Method for authenticating a product (20), **characterized in that** it comprises:

   - a step of capturing (340) on said product an image of a copy-robust mark (105) and of a copy-sensitive mark (110) with a higher resolution than the robust mark and another part of the product;
   - a step of transmitting an item of information representative of the image of said robust mark, of said sensitive mark, and of said other part of the image;
   - a step of comparing (343) said item of information representative of the image of said robust mark, of said sensitive mark, and of said other image portion with at least one item of information memorized remotely; and
   - depending on the result of said comparison step, a step of displaying (345, 346) data relating to the product of which an image was captured.

**13.** Method according to claim 12, wherein, during the comparison step (343), a step of determining (341) the quality of the image of the mark sensitive to copying is carried out first, then:

- if the quality is higher than a predefined value, then a comparison (342) of an item of information representative of the mark sensitive to copying,
- else a comparison (351) of an item of information representative of the other portion of the product.

14. Device for authenticating a product (20), **characterized in that** it comprises:

- a means for capturing on said product an image of a copy-robust mark (105) and of a copy-sensitive mark (110) with a higher resolution than the robust mark and another part of the product;
- a means for transmitting an item of information representative of the image of said robust mark, of said sensitive mark, and of said other part of the product;
- a means for comparing said item of information representative of the image of said robust mark, of said sensitive mark, and of said other image portion with at least one item of information memorized remotely, and
- a means for displaying data relative to the product of which an image was captured, depending on the result provided by the comparison means.

15. Device according to claim 14, wherein the comparison means is designed to perform firstly a step of determining the quality of the image of the copy-sensitive mark (110), then:

- if the quality is higher than a predefined value, then a comparison of an item of information representative of the copy-sensitive mark,
- else a comparison of an item of information representative of the other portion of the product (20).

Figure 1

Figure 10

| Début |
| --- |

↓

| Détermination d'une matrice | 205 |
| --- | --- |

↓

| Marquage de l'objet avec des marques robuste et fragile | 210 |
| --- | --- |

↓

| Capture d'une image | 215 |
| --- | --- |

↓

| Traitement de l'image pour déterminer des caractéristiques Individuelles du produit | 220 |
| --- | --- |

↓

| Mémorisation de caractéristiques | 225 |
| --- | --- |

↓

| Fin |
| --- |

Figure 2

Figure 3

Figure 4

Figure 5

Figure 6

| | |
|---|---|
| Réception d'une clé cryptographique | 301 |
| Génération de valeurs binaires aléatoires | 302 |
| Assemblage des valeurs binaires en un motif | 303 |
| Réception de surface disponible | 320 |
| Génération d'images avec différentes résolutions | 321 |
| Impression des différentes images | 322 |
| Capture d'images des motifs imprimés | 323 |
| Calcul d'empreintes (voir étapes 311 à 315) | 324 |
| Calcul de scores de similarité | 325 |
| Sélection d'une résolution | 326 |
| Impression d'objet avec motif identifiant | 327 |
| Détermination de la position du motif identifiant | 311 |
| Extraction de valeurs de points | 312 |
| Calcul d'une transformée en cosinus discrète | 313 |
| Sélection de coefficients de la transformée | 314 |
| Déterminations de valeurs extrêmes | 331 |
| Détermination du nombre de bits nécessaires | 332 |
| Normalisation des coefficients | 333 |
| Multiplication par nombre de valeurs possibles | 334 |
| Ordonnancement des coefficients en un vecteur | 315 |

Figure 7A

Non

| Détermination d'empreinte (étapes 311 à 315) | — 340 |

| Qualité d'empreinte suffisante ? | — 341 |

Oui

| Calcul de similarité avec empreintes stockées | — 342 |

| Sélection de similarité maximale | — 343 |

| Similarité valide si supérieure à un seuil | — 344 |

| Sélection d'informations de traçabilité associées | — 345 |

| Sinon, similarité non valide | — 346 |

| Extraction des informations de traçabilité | — 347 |

| Réception d'informations complémentaires | — 348 |

| Recherche dans une base de données | — 349 |

| Similarité de marque robuste et autre partie et de données géométriques | — 351 |

| Détermination d'authenticité | — 352 |

| Extraction d'informations de traçabilité ... | — 353 |

Figure 7B

Figure 8

Figure 9

**EP 2 596 479 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1672593 A
- DE 10224256
- WO 2008009826 A